(19) Europäisches Patentamt
European Patent Office
Office européen des brevets

(11) **EP 1 323 239 B1**

(12) **EUROPEAN PATENT SPECIFICATION**

(45) Date of publication and mention
of the grant of the patent:
**04.05.2011  Bulletin 2011/18**

(21) Application number: **01967870.5**

(22) Date of filing: **07.09.2001**

(51) Int Cl.:
**H04B 1/707** $^{(2011.01)}$

(86) International application number:
**PCT/SE2001/001945**

(87) International publication number:
**WO 2002/021714 (14.03.2002 Gazette 2002/11)**

(54) **METHOD AND ARRANGEMENT IN A COMMUNICATION SYSTEM**

VERFAHREN UND ANORDNUNG IN EINEM KOMMUNIKATIONSSYSTEM

PROCEDE ET AGENCEMENT D'UN SYSTEME DE COMMUNICATION

(84) Designated Contracting States:
**AT BE CH CY DE DK ES FI FR GB GR IE IT LI LU MC NL PT SE TR**
Designated Extension States:
**LT LV**

(30) Priority: **07.09.2000  SE 0003161**

(43) Date of publication of application:
**02.07.2003  Bulletin 2003/27**

(73) Proprietor: **TELIASONERA AB**
**106 63 Stockholm (SE)**

(72) Inventors:
• **ANDERSIN, Mikael**
**S-118 64 Stockholm (SE)**
• **HENRIKSSON, Anders**
**S-223 54 Lund (SE)**

(74) Representative: **Hopfgarten, Nils et al**
**Groth & Co. KB**
**P.O. Box 6107**
**102 32 Stockholm (SE)**

(56) References cited:
**WO-A2-00/57654**

• **MURAT TORLAK ET AL.: 'Blind estimation of FIR channels in CDMA systems with aperiodic spreading sequences' CONFERENCE RECORD OF THE 31ST ASILOMAR CONFERENCE ON SIGNALS, SYSTEMS AND COMPUTERS vol. 1, 1998, pages 495 - 499, XP000883970**

**Description**

Technical field

The present invention relates to a method, a device and a software product at a telecommunication and data communication system according to the introduction to the independent claims. More exactly the method relates to making measuring in real time of the in said system specified quantity Signal-to-Interference Ratio (SIR) possible, where SIR is adapted to the mobile telecommunication and data communication technology Code Division Multiple Access (CDMA).

Prior art

UMTS (Universal Mobile Telecommunications System) is the European denomination of the mobile system of the third generation, IMT-2000, which is planned to be in operation at the beginning of the twenty-first century. The system has three defined modes which all have the common feature that they are using the technology CDMA in some form.

In a CDMA-system based on Direct sequence Spreading Code Division Multiple Access (DS-CDMA), different users and different base stations are distinguished by use of codes. In UMTS, which is based on DS-CDMA, two different kinds of codes are used, orthogonal spreading codes and long scrambling codes. In downlink different users in a cell are distinguished by means of the spreading code. Users in different cells are distinguished in downlink by means of the scrambling code. The scrambling code beside assists in minimizing the inter symbol interference for a user since it is very long, 38400 chip, and has low auto and cross correlation. In uplink it is only the scrambling code that distinguishes different users.

A chip is the smallest bit/symbol (waveform) which builds up a CDMA-signal.

To make the radio resource management function, a number of different quantities have been specified, see for instance 3G TS25.215 v3.1.0, 3GPP TSG RAN; *"Physical layer - Measurements* (FDD)", 1999-12, 3G TS25.225 v3.1.0, 3GPP TSG RAN; *"Physical layer - Measurements* (TDD)", 1999-12, and 3G TS25.302 v3.2.0, 3GPP TSG RAN; *"Services provided by the Physical Layer",* 1999-12. SIR, i.e. the ratio between wanted signal power and interference plus noise power, has turned out to be useful as parameter for functions such as choice of cell, handover, adaptive channel encoding and transmitter power control. The latter is a very central part in CDMA, the power control is a condition for making the CDMA-system function.

Though it has turned out that SIR is an interesting quantity to use as quality measure, there have been comparatively few studies concentrated on the problem how to do measurings (or more correctly estimations) of this quantity in real time. Most methods which have been developed have been directed on the small/narrow band systems Frequency Division Multiple Access (FDMA), respective Time Division Multiple Access (TDMA).

One such method is described by M. Andersin in "Power Control and Admission Control in Cellular systems", doctoral thesis, TRITA-S3-RST-9609, ISSN 1400-9137, the Royal Institute of Technology, Stockholm May 1996. This document henceforth is denominated Document 1. A disadvantage with this method consequently is that it is not adapted to CDMA.

Document 2, *"Subspace Based Estimation of the Signal-to-Interference Ratio for CDMA Cellular Systems"* by N.B. Mandayam and R.D. Yates, in Proceedings of IEEE VTC'97, Phoenix, May 1977, shows an algorithm which is intended for CDMA. Both this algorithm and the algorithm in Document 1, however, implies that a known training sequence, like the one in Global Service for Mobile Systems (GSM), is transmitted on a very regular basis. These training sequences can not include any payload data, i.e. the data bits which are building up the training sequence cannot be used for any other purpose than channel and SIR-estimation. In GSM the training sequence is used to estimate the channel for use in the channel equalizer. In the CDMA-systems which are used in UMTS, no training sequence is used. It is for that reason necessary to look for other possibilities.

The article "Blind Estimation of FIR Channels in CDMA Systems with Aperiodic Spreading Sequences" by Murat Torlak et. al., Conference record of the 31st Asilomar Conference on Signals, Systems and Computers, vol. 1, 1998, pages 495-499, discloses a method for blind estimation of FIR channels in CDMA systems. According to the method, an estimation algorithm is used to estimate the channel by means of a Toeplitz matrix, wherein the matrix comprises elements corresponding to spreading codes. The method may serve as a preprocessing step in a receiver to increase SIR.

Summary of the invention

The aim of the present invention is to eliminate above mentioned problems and effect a way to estimate SIR in real time when SIR is adapted to CDMA.

This is achieved by a method, a device and a software product defined in the independent claims.

Owing to the algorithm according to the invention operating directly on the scrambling sequence instead of specific training sequences, it can be applied to CDMA-systems.

One advantage of the present invention is that because it is operating on chip level, it will be faster and provide better results than other methods.

Another advantage of the present invention is that it is robust to changes in the speeds of the mobiles and the number of interferers, which is a desired quality.

Brief description of figures

Figure 1 shows a flow chart of the method according to the present invention.

Figure 2 is a block diagram which illustrates a SIR estimation device according to the present invention.

Description of embodiments

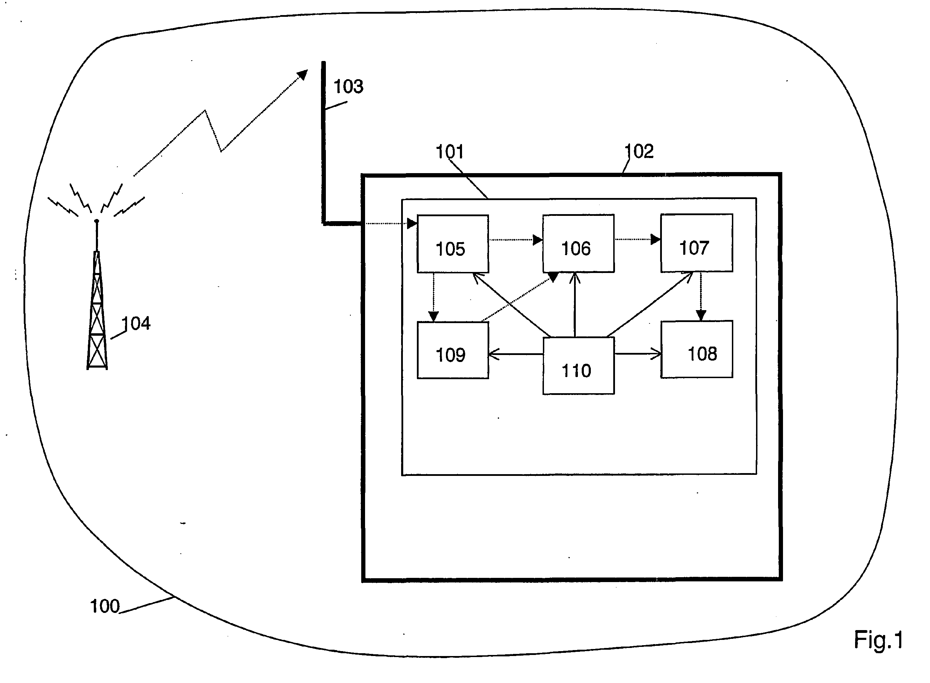

Figure 1 is a block diagram which illustrates a SIR estimation device 101 according to the present invention. The text refers to equations which will be described further on. The SIR estimation device 101 is included in a unit 102 as, for instance, a mobile terminal, which unit 102 is included in a telecommunication and data communication system 100 based on CDMA. The unit 102 has a receiver 103 which receives signals from a transmitter 104, which is also included in the mobile telephone system. The SIR estimation device 101 makes use of an estimation algorithm which estimates SIR by means of a Toeplitz matrix by creating this matrix from the scrambling code. The SIR estimation device 101 has means 105 which is arranged to, at the receiver, during each received information symbol create an observation vector (equation 3) which originates from the transmitted signal. The SIR estimation device 101 also has means 106 which is arranged to, from each observation vector, calculate a projection matrix (equation 9) for the received signal. The SIR estimation device 101 further has means 107 which is arranged to project the received signal with the project matrix for creating a measure of the interference and noise of the received signal. The SIR estimation device 101 also has means 108 which is arranged to, for the received signal, create a SIR-estimate based on the power of the received signal (equation 10) divided by the interference and noise of the received signal as this is determined at said projection. According to one embodiment, the SIR estimation device 101 has a means 109 which is arranged to extend the observation vector with interference from other transmitters and with noise. The different means are controlled by a computer unit 110 in the receiving unit 102.

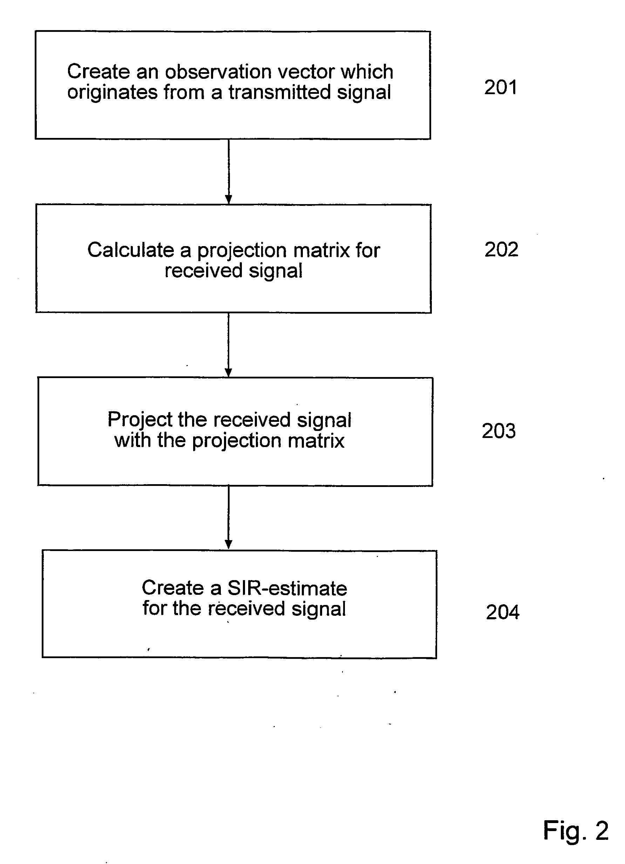

Figure 2 shows a flow chart for a SIR estimation method in one on CDMA based telecommunication and data communication system 100 according to the present invention. The method refers to equations which will be described further on and includes the following steps:

201. A transmitter 104 transmits a signal (equation 2) to a receiver 103. During each received information symbol an observation vector (equation 3) which originates from the transmitted signal is created at the receiver.

202. From each observation vector a projection matrix (equation 9) is calculated for the received signal)

203. The received signal is then projected with the projection matrix for creation of a measure of the interference and noise of the received signal, and

204. For the received signal a SIR-estimate is created based on the power of the received signal (equation 10) divided by the interference and noise of the received signal as this is determined at said projection.

The method is implemented by means of a software product including software code to perform the method steps. The software is run on a computer unit 110 in the mobile telephone system 100.

The software can be loaded down directly or from a medium which can be used by a computer, such as a diskette, CD or Internet. The software also can be stored in the unit at the manufacturing of the computer unit.

Mathematical description of the algorithm:

The invention includes an algorithm which is a further development and improvement of the algorithm which is shown in Document 1. The algorithm does not make use of any training sequence, is based on a known method within linear algebra, and makes use of projection matrices.

The algorithm according to the invention is based on that the scrambling code is known and that only this, or this in combination with the spreading code, can replace the training sequence which is used in Document 2 and 1. This is possible due to the statistical qualities of the scrambling code.

The information symbol which is transmitted at the time $t_k$, by transmitter $j$ is denoted by $c_j(t_k)$. The received symbol $r_{ij}(t_k)$ in receiver $i$ at the time $t_k$ can be expressed as:

$$r_{ij}(t_k) = \sum_{m=1}^{M} h_{ij}^m(t_k) c_j(t_{k-m+1}) \sqrt{p_j(t_{k-m+1})} \qquad (1)$$

where $p_j(t)$ is the output power of transmitter $j$ at the time $t$, and $h_{ij}^m(t_k)$ describes the channel between transmitter $j$ and receiver $i$ at the time $t_k$.

The total received signal in receiver i then will be:

$$r_i(t_k) = r_{ii}(t_k) + \sum_{j:j\neq i} r_{ii}(t_k) + n_i(t_k) \qquad (2)$$

where $r_{ii}(t_k)$ denotes the payload information, $\sum_{j:j\neq i} r_{ii}(t_k)$ is the interference from other transmitters, and $n_i(t_k)$ is the noise in the receiver.

The algorithm according to the invention makes use of so called observation vectors which are created during the reception of each information symbol. Assume that the channel does not vary to any appreciable extent during L+M-1 consecutively received symbols (we will discuss this assumption below). Let also the sub sequence of received symbols be $\{r_i(t_M), r_i(t_{M+1}), ..., r_i(t_{M+L-1})\}$. Further, let $h_i^m(t_1)$, ($m = 1,...M$) be the channel taps, and $p_i(t_1)$ be the transmitter power during this period. A channel tap is a part of a radio receiver which is set to receive a signal which, due to reflections etc, is delayed a period of time compared with the first received component of the signal. Then an observation vector $y_i$ of the length L, can be created, which originates from the wanted signal in the following way:

$$y_i = C_i d_i \qquad (3)$$

where the observation vector $y_i = [r_i(t_M),...,r_i(t_{M+L-1})]^T$. The channel and the transmitted power is represented by the vector $d_i$

$$d_i = \sqrt{p_i(t_1)} \left[ h_i^1(t_1), h_i^2(t_1), ..., h_i^M(t_1) \right]^T \qquad (4)$$

The matrix $C_i$ is a so called Toeplitz matrix of dimension L x M with the following structure:

$$C_i = \begin{bmatrix} c_i(t_M) & \cdots & c_i(t_2) & c_i(t_1) \\ c_i(t_{M+1}) & \cdots & c_i(t_3) & c_i(t_2) \\ \vdots & \ddots & \vdots & \vdots \\ c_i(t_{M+L-1}) & \cdots & c_i(t_{L+1}) & c_i(t_L) \end{bmatrix} \qquad (5)$$

If the model now is extended with interference from other transmitters and noise, (3) can be rewritten as:

$$y_i(k) = C_i(k)d_i(k) + \sum_{j:j\neq i} C_j(k)d_j(k) + n_i(k) \qquad (6)$$

This vector is in a space $R$ with dimension L.

Because the aim is not to detect any payload data, i.e. the information which the user transmits, in the estimation but only to estimate SIR, payload data and the spreading code in the channel vector $d_i$ can, without loss of generality, be included, so that $C_id_i=C'_iD_id_i=C'_id'_i$. The matrix $C'_i$ now only consists of the symbols in the scrambling code which we know in advance.

We now will study the cases when $L>M$. This means that the matrix $C'_i$ will be rectangular and its columns only span a *subspace $R_0$* of the space $R$. The wanted signal $C'_i(k)d'_i(k)$ is projected in this subspace and there exists a so called zero space of $R_0$ where the signal does not exist (see further Document 1). But the fact that $L>M$ means that the matrix $C'_i$ defines the space which is spanned. A projection matrix then can be used which fulfils the condition:

$$P^{\perp}_{C_i(k)}(k)C'_i(k) = 0 \qquad (7)$$

There are a plurality of matrices which fulfil such a relation, but the projection matrix $P$ to $C$ shall be used, which has turned out to obtain good results in other applications. It is created according to the following:

$$P^{\perp}_{C_i(k)}(k) = I - C'_i(k)\left(C'^{H}_i(k)C'_i(k)\right)^{-1}C'^{H}_i(k) \qquad (8)$$

where $C^H$ indicates Hermitian transpose of the matrix $C$.

Then is obtained:

$$P^{\perp}_{C_i(k)}(k)y_i(k) = P^{\perp}_{C_i(k)}(k)C'_i(k)d_i(k) + P^{\perp}_{C_i(k)}(k)\sum_{j:j\neq i}C'_j(k)d_j(k) + P^{\perp}_{C_i(k)}(k)n_i(k) =$$
$$= P^{\perp}_{C_i(k)}(k)\sum_{j:j\neq i}C'_j(k)d_j(k) + P^{\perp}_{C_i(k)}(k)n_i(k) \qquad (9)$$

I.e. the received signal $y_i(k)$ is projected in the subspace where only interference plus noise exist (for that reason the whole wanted signal disappears in equation (9) above).

Without loosing in generality is supposed that the chip has been normalized. Should they not be normalized, this can easily be achieved by a trivial division process.

The total received power can per definition be written as

$$E[\,y^{H}_i(k)y_i(k)\,]$$

A wait value correct estimate of this quantity is the time average of the $N_a$ latest samples, i.e. the estimate $\hat{p}_i$ (n) of the total received power can be written as

$$\hat{p}_i(n) = \tfrac{1}{L}\tfrac{1}{N_a}\sum\nolimits_{k=n-N_a+1}^{n} y_i^H(k)y_i(k) \tag{10}$$

An estimate $\hat{I}(n)$ of the received interference plus the noise is obtained from (9) and (10) as

$$\hat{I}(n) = \tfrac{1}{L-M}\tfrac{1}{N_a}\sum\nolimits_{k=n-N_a+1}^{n} y_i^H(k)P_{C_i(k)}^\perp y_i(k)$$

A SIR-estimator consequently is obtained as

$$\gamma_{SIR}(n) = \frac{\hat{p}_{ii}(n)}{\hat{I}(n)} = \frac{\hat{p}_i(n) - \hat{I}(n)}{\hat{I}(n)} = \frac{\tfrac{1}{L}\tfrac{1}{N_a}\sum_{k=n-N_a+1}^{n} \mathbf{y}_i^H(k)\mathbf{y}_i(k)}{\tfrac{1}{L-M}\tfrac{1}{N_a}\sum_{k=n-N_a+1}^{n} \mathbf{y}_i^H(k)\mathbf{P}_{\mathbf{C}_i(k)}^\perp \mathbf{y}_i(k)} - 1 =$$

$$= \frac{L-M}{L}\frac{\sum_{k=n-N_a+1}^{n} \mathbf{y}_i^H(k)\mathbf{y}_i(k)}{\sum_{k=n-N_a+1}^{n} \mathbf{y}_i^H(k)\mathbf{P}_{\mathbf{C}_i(k)}^\perp \mathbf{y}_i(k)} - 1 \tag{11}$$

By all the included parameters (8) and (11) being available, a SIR-estimator is obtained which can be implemented in the receiver.

The equation in (9) assumes that the projection matrix does not project away any interference in the operation. For this being valid is required that no interferer "spans" the same, or partly the same, space as the signal from the wanted transmitter. This requires that the correlation between the scrambling codes and cyclic shifts of these is low, but it is just in that way the scrambling codes are designed. So this is no problem.

Instead of using training sequences as in the GSM-case, the scrambling codes, possibly together with the spreading codes, can be used directly in the estimation process. This is only positive, because one during a given period of time can obtain more observation vectors when the algorithm operates on chip level which provides conditions for considerably better estimates (in comparison with the GSM-case).

If the added spreading and scrambling sequence had been the same for each transmitted information symbol, the observation vectors might be created with the same part of this sequence for all vectors, and for the matrix $C_i(k)$ then would apply that $C_i(k) = C_i$ for all $k$. It then would be sufficient to calculate the matrix only once and use this for all observation vectors..

In this case, however, the added spreading and scrambling sequence for each transmitted information symbol varies. This is solved according to the following principle where the WCDMA-system in UMTS is used as example. In this system the length of the scrambling code is 38400 chip and is transmitted at 10 ms (3,84 Mchip/s). Consequently each sequence of chip recurs each $10^{th}$ ms. For each sequence of 10 ms $N_c$ observation vectors ($j = 1,..., N_c$) are created. The $j$:**th** observation vector in each sequence of 10 ms now has the same matrix $C_j(k)$, i.e. the same situation as above. For these vectors it then will be possible to calculate corresponding projection matrix in advance. Instead of using only one projection matrix, one now instead has to use $N_c$ different ones (which all can be calculated in advance). It is realized that according to this procedure a very large number of samples can be obtained, which makes the estimator both fast and reliable.

One neither need to use so many elements in the observation vectors to get a good result. Simulation results show that it is sufficient with a size of a few more than the number of channel taps M. The important thing here is to get a sufficient large dimension of the zero space, resulting in a sufficient number of components to estimate the interference plus the noise. If there is, for instance, maximally 4 channel taps, it will be sufficient with about 7-8 elements in the observation vectors. To invert or store such a matrix is no problem.

A question which should be asked about the performance of the algorithm, is how it will function if the channel is not constant during L+M-1 chip. Simulation results show that this is no problem at all when the principle is applied to GSM-systems. Because the chip time is considerably much smaller in a CDMA-system than the symbol time in a GSM-system, the assumption of a "constant" channel is more valid in a CDMA-system. So the result in Document 1 can only be improved for this situation.

In a practical CDMA-system, the codes (the spreading and scrambling sequences) are not quite orthogonal. The consequences for the algorithm above will be that at the projection (in equation 9 above) a certain part of the interference can be projected away which should not have been projected away. It should be observed that this only applies to the interference and not the noise. This results in that the interference is underestimated and that SIR consequently is overestimated. This has been studied in Document 1 and simulation results show that the deterioration is very marginal. The fact is that the error which is made, quite simply will "drown" in all other errors which will occur for other reasons. The explanation of the-advantageous result originates from the construction of the scrambling codes (low auto and cross correlation) which results in that the different matrices $C_i'(k)$ span close at disjunct subspaces, i.e. at the projection the error will be almost negligible.

The algorithm also has turned out to be very robust against changes of speeds of the mobiles and the number of interferers which is a desirable quality.

The invention is general insofar as it can be applied to just any CDMA-system. In UMTS it will be possible to estimate SIR on the dedicated channels in downlink, DPCH. The algorithm also can be applied to the American cdmaOne-system.

## Claims

1. A method for estimation of the Signal-to-Interference Ratio, SIR, in a CDMA-based telecommunication and data communication system (100) using a scrambling code, the method including an estimation algorithm which estimates SIR by means of a Toeplitz matrix, wherein:

    • the exact scrambling code is introduced into the Toeplitz matrix to effect said SIR-estimation,
    • during reception of each information symbol of a signal transmitted from a transmitter, at a receiver, an observation vector is created (201), which originates from the transmitted signal and comprises the received information symbols,
    • from each observation vector, a projection matrix for the received signal is calculated (202).
    • the received signal is projected (203) with the projection matrix for creating a measure of the interference and noise of the received signal, and
    • for the received signal a SIR-estimate is created (204) based on the power of the received signal divided by the interference and noise of the received signal as this has been determined at said projection
    and said estimation algorithm is

$$\frac{L-M}{L} \frac{\sum_{k=n-N_n+1}^{n} \mathbf{y}_i^H(k)\mathbf{y}_i(k)}{\sum_{k=n-N_n+1}^{n} \mathbf{y}_i^H(k)\mathbf{P}_{C_i(k)}^{\perp}\mathbf{y}_i(k)} - 1$$

    where

$$P_{C_{i(n)}}^{\perp}(k) = I - C_i'(k)\left(C_i'^H(k)C_i'(k)\right)^{-1} C_i'^H(k) ,$$

$C_i'$ is said Toeplitz matrix of dimension $L \times M$, consisting of the symbols in the scrambling code, and $y_i$ is the observation vector.

2. A Method as claimed in claim 1, **characterized in that** the observation vector is extended with interference from other transmitters and with noise.

3. A Method as claimed in claim 2, **characterized in that** the number of elements in the observation vector is greater than the number of channel taps in a receiver unit.

4. A method as claimed in any of the claims 1-3, where the CDMA-based telecommunication and data communication system (100) further uses a spreading code, **characterized in that** the spreading code in combination with the scrambling code is introduced into the Toeplitz matrix to effect said SIR-estimation.

**5.** A software product directly loadable into the internal memory of a computer (110) included in a SIR-estimation device (101) belonging to a CDMA based telecommunication and data communication system (100; **characterized in that** it includes software code for executing the method steps of any of the claims 1-4.

**6.** An SIR-estimation device (101) for estimation of the Signal-to-Interference Ratio (SIR) in a CDMA-based telecommunication and data communication system (100), which telecommunication and data communication system (100) uses a scrambling code, and where said SIR-estimation device (101) includes an estimation algorithm which estimates SIR by means of a Toeplitz matrix, **characterized in that** the SIR-estimation device (101) includes
means for introducing the exact scrambling code into the Toeplitz matrix, means (105) for creating an observation vector, which originates from the transmitted signal, during reception of each information symbol of a signal transmitted from a transmitter at a receiver, the observation vector comprising the received information symbols,
means (106) for calculating a projection matrix for the received signal from each observation vector,
means (107) for projecting the received signal with the projection matrix for creating a measure of the interference and noise of the received signal, and
means (108) for creating a SIR-estimate for the received signal, based on the power of the received signal divided by the interference and noise of the received signal as this has been determined at said projection, **in that** the number of elements in the observation vector is greater than the number of channel taps in a receiver unit
and **in that** said estimation algorithm is

$$\frac{L-M}{L} \frac{\sum_{k=n-N_s+1}^{n} y_i^H(k) y_i(k)}{\sum_{k=n-N_s+1}^{n} y_i^H(k) P_{C_i(k)}^{\perp} y_i(k)} - 1$$

where

$$P_{C_i(k)}^{\perp}(k) = I - C_i'(k) \left[ C_i'^H(k) C_i'(k) \right]^{-1} C_i'^H(k) ,$$

$C_i'$ is said Toeplits matrix of dimension $L \times M$, consisting of the symbols in the scrambling code, and $y_i$ is the observation vector.

**7.** An SIR-estimation device as claimed in claim 6, **characterized in that** it includes means (109) for extending the observation vector with interference from other transmitters and with noise.

**8.** An SIR-estimstion device (101) as claimed in any of the claims 6-7, where the CDMA-based telecommunication and data communication system (100) further uses a spreading code, **characterized in that** the SIR-estimation device (101) includes means for introducing the spreading code in combination with the scrambling code into the Toeplitz matrix.

**Patentansprüche**

**1.** Verfahren zum Abschätzen des Störabstands (Signal-to-Interference Ratio, SIR) in einem CDMA-Telekommunikations- und Datenkommunikationssystem (100) unter Verwendung eines Verwürfelungscodes, wobei das Verfahren einen Abschätzalgorithmus umfasst, welcher den SIR mittels einer Toeplitz-Matrix abschätzt, wobei:

• der genaue Verwürfelungscode in die Toeplitz-Matrix eingegeben wird, um die SIR-Abschätzung durchzuführen,
• während des Empfangs jedes Informationssymbols eines Signals, das von einem Sender gesendet wird, in einem Empfänger ein Beobachtungsvektor erzeugt wird (201), welcher aus dem gesendeten Signal stammt und die empfangenen Informationssymbole umfasst,

• von jedem Beobachtungsvektor eine Projektionsmatrix für das empfangene Signal berechnet wird (202),

• das empfangene Signal mit der Projektionsmatrix projiziert wird (203), um ein Maß für die Störung und das Rauschen des empfangenen Signals zu erzeugen, und

• für das empfangene Signal basierend auf der durch die Störung und das Rauschen des empfangenen Signals, wie sie bei der Projektion bestimmt worden sind, dividierten Leistung des empfangenen Signals eine SIR-Abschätzung erzeugt wird (204) und der Abschätzalgorithmus der folgende ist:

$$\frac{L-M}{L} \frac{\sum_{k=n-N_s+1}^{n} y_i^H(k) y_i(k)}{\sum_{k=n-N_s+1}^{n} y_i^H(k) P_{C(i)}^{\perp} y_i(k)} - 1$$

wobei

$$P_{C(i)}^{\perp}(k) = I - C_i'(k) \left[ C_i'^{H}(k) C_i'(k) \right]^{-1} C_i'^{H}(k) \,,$$

$C_i'$ für die Toeplitz-Matrix der Dimension L x M steht, welche aus den Symbolen des Verwürfelungscodes besteht, und $y_i$ für den Beobachtungsvektor steht.

2.  Verfahren nach Anspruch 1,
    **dadurch gekennzeichnet, dass** der Beobachtungsvektor mit Störungen aus anderen Sendern und Rauschen erweitert wird.

3.  Verfahren nach Anspruch 2,
    **dadurch gekennzeichnet, dass** die Anzahl der Elemente in dem Beobachtungsvektor größer ist als die Anzahl der Kanalabzweigungen in einer Empfängereinheit.

4.  Verfahren nach einem der Ansprüche 1 bis 3, wobei in dem CDMA-Telekommunikations- und Datenkommunikationssystem (100) ferner ein Spreizcode benutzt wird, **dadurch gekennzeichnet, dass** der Spreizcode in Kombination mit dem Verwürfelungscode in die Toeplitz-Matrix eingegeben wird, um die SIR-Abschätzung durchzuführen.

5.  Software-Produkt, welches direkt in den internen Speicher eines Computers (110) geladen werden kann, der in einer SIR-Abschätzungsvorrichtung (101) enthalten ist, die zu einem CDMA-Telekommunikations- und Datenkommunikationssystem (100) gehört, **dadurch gekennzeichnet, dass** es einen Software-Code zum Ausführen der Verfahrensschritte eines der Ansprüche 1 bis 4 umfasst.

6.  SIR-Abschätzungsvorrichtung (101) zum Abschätzen des Störabstands (SIR) in einem CDMA-Telekommunikations- und Datenkommunikationssystem (100), wobei in dem Telekommunikations- und Datenkommunikationssystem (100) ein Verwürfelungscode benutzt wird und wobei die SIR-Abschätzungsvorrichtung (101) einen Abschätzalgorithmus umfasst, über welchen der SIR mittels einer Toeplitz-Matrix abgeschätzt wird, **dadurch gekennzeichnet, dass** die SIR-Abschätzungsvorrichtung (101) das Folgende umfasst:

    ein Mittel zum Eingeben des genauen Verwürfelungscodes in die Toeplitz-Matrix,
    ein Mittel (105) zum Erzeugen eines Beobachtungsvektors, welcher aus dem gesendeten Signal stammt, während des Empfangs jedes Informationssymbols eines Signals, das von einem Sender gesendet wird, in einem Empfänger, wobei der Beobachtungsvektor die empfangenen Informationssymbole umfasst,
    ein Mittel (106) zum Berechnen einer Projektionsmatrix für das empfangene Signal von jedem Beobachtungsvektor,
    ein Mittel (107) zum Projizieren des empfangenen Signals mit der Projektionsmatrix, um ein Maß für die Störung und das Rauschen des empfangenen Signals zu erzeugen, und
    ein Mittel (108) zum Erzeugen einer SIR-Abschätzung für das empfangene Signal basierend auf der durch die Störung und das Rauschen des empfangenen Signals, wie sie bei der Projektion bestimmt worden sind, dividierten Leistung des empfangenen Signals, und dass die Anzahl der Elemente in dem Beobachtungsvektor größer ist als die Anzahl der Kanalabzweigungen in einer Empfängereinheit, und dass der Abschätzalgorithmus der folgende ist:

$$\frac{L-M}{L}\frac{\sum_{k=n-N_a+1}^{n}\mathbf{y}_i^H(k)\mathbf{y}_i(k)}{\sum_{k=n-N_a+1}^{n}\mathbf{y}_i^H(k)\mathbf{P}_{C_i(k)}^{\perp}\mathbf{y}_i(k)}-1$$

wobei

$$\mathbf{P}_{C_i(k)}^{\perp}(k)=\mathbf{I}-C_i'(k)\left(C_i'^H(k)C_i'(k)\right)^{-1}C_i'^H(k),$$

$C_i'$ für die Toeplitz-Matrix der Dimension L x M steht, welche aus den Symbolen des Verwürfelungscodes besteht, und $y_i$ für den Beobachtungsvektor steht.

**7.** SIR-Abschätzungsvorrichtung nach Anspruch 6, **dadurch gekennzeichnet, dass** sie ein Mittel (109) zum Erweitern des Beobachtungsvektor mit Störungen aus anderen Sendern und Rauschen umfasst.

**8.** SIR-Abschätzungsvorrichtung (101) nach einem der Ansprüche 6 bis 7, wobei das CDMA-Telekommunikations- und Datenkommunikationssystem (100) ein Mittel zum Eingeben des Spreizcodes in Kombination mit dem Verwürfelungscode in die Toeplitz-Matrix umfasst.

## Revendications

**1.** Méthode d'estimation du rapport signal/brouillage, SIR, dans un système de télécommunication et communication de données à accès multiple par différence de code (100) en utilisant un code de brouillage, ladite méthode comprenant un algorithme d'estimation qui estime le SIR au moyen d'une matrice de Toeplitz, dans laquelle :

• on introduit le code de brouillage exact dans la matrice de Toeplitz afin d'effectuer ladite estimation du SIR,
• lors de la réception de chaque symbole d'information d'un signal transmis depuis un émetteur, au niveau d'un récepteur, on crée (201) un vecteur d'observation issu du signal transmis et comprenant les symboles d'information reçus,
• à partir de chaque vecteur d'observation, on calcule (202) une matrice de projection pour le signal reçu,
• on projette (203) le signal reçu au moyen de la matrice de projection afin de créer une mesure du brouillage et du bruit du signal reçu, et
• pour le signal reçu, on crée (204) une estimation du SIR basée sur la puissance du signal reçu divisée par la mesure du brouillage et le bruit du signal reçu telle qu'elle a été déterminée par ladite projection, et ledit algorithme d'estimation est

$$\frac{L-M}{L}\frac{\sum_{k=n-N_a+1}^{n}\mathbf{y}_i^H(k)\mathbf{y}_i(k)}{\sum_{k=n-N_a+1}^{n}\mathbf{y}_i^H(k)\mathbf{P}_{C_i(k)}^{\perp}\mathbf{y}_i(k)}-1$$

où

$$\mathbf{P}_{C_i(k)}^{\perp}(k)=\mathbf{I}-C_i'(k)\left(C_i'^H(k)C_i'(k)\right)^{-1}C_i'^H(k)$$

$C'_i$ est ladite matrice de Toeplitz de dimension L x M, constituée des symboles du code de brouillage, et $y_i$ est le vecteur d'observation.

2. Méthode selon la revendication 1, **caractérisée en ce que** le vecteur d'observation est étendu avec du brouillage d'autres émetteurs et avec du bruit.

3. Méthode selon la revendication 2, **caractérisée en ce que** le nombre des éléments du vecteur d'observation est supérieur au nombre des connexions de canaux d'un module récepteur.

4. Méthode selon l'une quelconque des revendications 1 à 3, dans laquelle le système de télécommunication et communication de données à accès multiple par différence de code (100) utilise en plus un code d'étalement, **caractérisée en ce que** le code d'étalement combiné avec le code de brouillage est introduit dans la matrice de Toeplitz afin d'effectuer ladite estimation du SIR.

5. Produit logiciel pouvant être chargé directement dans la mémoire interne d'un ordinateur (110) incorporé dans un dispositif d'estimation du SIR (101) appartenant à un système de télécommunication et communication de données à accès multiple par différence de code (100), **caractérisé en ce qu'**il contient du code logiciel permettant d'exécuter les étapes de la méthode selon l'une quelconque des revendications 1 à 4.

6. Dispositif d'estimation du SIR (101) servant à estimer le rapport signal/brouillage (SIR) dans un système de télécommunication et communication de données à accès multiple par différence de code (100), lequel système de télécommunication et communication de données (100) utilise un code de brouillage et ledit dispositif d'estimation du SIR (101) contient un algorithme d'estimation qui estime le SIR au moyen d'une matrice de Toeplitz, **caractérisé en ce que** le dispositif d'estimation du SIR (101) comprend :

des moyens pour introduire le code de brouillage exact dans la matrice de Toeplitz,
des moyens (105) pour créer un vecteur d'observation issu du signal transmis, lors de la réception de chaque symbole d'information d'un signal transmis depuis un émetteur au niveau d'un récepteur, le vecteur d'observation comprenant les symboles d'information reçus,
des moyens (106) pour calculer une matrice de projection pour le signal reçu de chaque vecteur d'observation,
des moyens (107) pour projeter le signal reçu au moyen de la matrice de projection afin de créer une mesure du brouillage et du bruit du signal reçu, et
des moyens (108) pour créer une estimation du SIR pour le signal reçu, basée sur la puissance du signal reçu divisée par la mesure du brouillage et du bruit du signal reçu telle qu'elle a été déterminée par ladite projection,
**en ce que** le nombre des éléments du vecteur d'observation est supérieur au nombre des connexions de canaux d'un module récepteur et **en ce que** ledit algorithme d'estimation est

$$\frac{L-M}{L}\frac{\sum_{k=n-N_a+1}^{n}\mathbf{y}_i^H(k)\mathbf{y}_i(k)}{\sum_{k=n-N_a+1}^{n}\mathbf{y}_i^H(k)\mathbf{P}_{\mathbf{C}_i(k)}^{\perp}\mathbf{y}_i(k)}-1$$

où

$$P_{C_i(k)}^{\perp}(k)=I-C'_i(k)\left(C_i'^H(k)C'_i(k)\right)^{-1}C_i'^H(k)$$

$C'_i$ est ladite matrice de Toeplitz de dimension L x M, constituée des symboles du code de brouillage, et $y_i$ est le vecteur d'observation.

7. Dispositif d'estimation du SIR selon la revendication 6, **caractérisé en ce qu'**il comprend des moyens (109) pour étendre le vecteur d'observation avec du brouillage d'autres émetteurs et avec du bruit.

8. Dispositif d'estimation du SIR (101) selon l'une quelconque des revendications 6 à 7, dans lequel le système de télécommunication et communication de données à accès multiple par différence de code (100) utilise en plus un code d'étalement, **caractérisé en ce que** le dispositif d'estimation du SIR (101) comprend des moyens pour introduire le code d'étalement combiné avec le code de brouillage dans la matrice de Toeplitz.

Fig.1

EP 1 323 239 B1

Create an observation vector which
originates from a transmitted signal

201

Calculate a projection matrix for
received signal

202

Project the received signal
with the projection matrix

203

Create a SIR-estimate
for the received signal

204

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Power Control and Admission Control in Cellular systems. **M. Andersin.** doctoral thesis, TRI-TA-S3-RST-9609. Royal Institute of Technology, May 1996, 1400-9137
- **N.B. Mandayam ; R.D. Yates.** Subspace Based Estimation of the Signal-to-Interference Ratio for CDMA Cellular Systems. *Proceedings of IEEE VTC'97,* May 1977
- **Murat Torlak.** Blind Estimation of FIR Channels in CDMA Systems with Aperiodic Spreading Sequences. *Conference record of the 31st Asilomar Conference on Signals, Systems and Computers,* 1998, vol. 1, 495-499